(19) **Europäisches Patentamt / European Patent Office / Office européen des brevets**

(11) **EP 2 681 579 B1**

(12) **FASCICULE DE BREVET EUROPEEN**

(45) Date de publication et mention de la délivrance du brevet:
**16.08.2017 Bulletin 2017/33**

(21) Numéro de dépôt: **12708114.9**

(22) Date de dépôt: **01.03.2012**

(51) Int Cl.:
**G01S 3/48** (2006.01)  **G01S 13/90** (2006.01)

(86) Numéro de dépôt international:
**PCT/EP2012/053580**

(87) Numéro de publication internationale:
**WO 2012/117080 (07.09.2012 Gazette 2012/36)**

(54) **PROCÉDÉ DE POSITIONNEMENT D'UN MOBILE SUR UNE IMAGE RADAR**

VERFAHREN ZUM POSITIONIEREN EINES BEWEGLICHEN ELEMENTS AUF EINEM RADARBILD

METHOD FOR POSITIONING A MOVING ELEMENT ON A RADAR IMAGE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **03.03.2011 FR 1100645**

(43) Date de publication de la demande:
**08.01.2014 Bulletin 2014/02**

(73) Titulaire: **Thales**
**92400 Courbevoie (FR)**

(72) Inventeurs:
- **BOSSER, Luc**
  **FR Rambouillet (FR)**
- **HOTTIER, Vincent**
  **F-78170 La Celle Saint Cloud (FR)**
- **LE FOLL, Didier**
  **F-95390 Saint Prix (FR)**
- **SFEZ, Thierry**
  **75012 Paris (FR)**

(74) Mandataire: **Lucas, Laurent Jacques**
**Marks & Clerk France**
**Conseils en Propriété Industrielle**
**Immeuble Visium**
**22, Avenue Aristide Briand**
**94117 Arcueil Cedex (FR)**

(56) Documents cités:
**EP-A1- 0 031 443**

- **E. YADIN: "Evaluation of noise and clutter induced relocation errors in SAR MTI", PROCEEDINGS INTERNATIONAL RADAR CONFERENCE, 1 janvier 1995 (1995-01-01), pages 650-655, XP055010615, DOI: 10.1109/RADAR.1995.522626 ISBN: 978-0-78-032121-2**
- **BUDILLON A ET AL: "Moving Target Detection in along Track SAR Interferometry from In-Phase and Quadrature Components Data", GEOSCIENCE AND REMOTE SENSING SYMPOSIUM, 2008. IGARSS 2008. IEEE INTERNATIONAL, IEEE, PISCATAWAY, NJ, USA, 7 juillet 2008 (2008-07-07), pages III-1178-III-1181, XP031422717, ISBN: 978-1-4244-2807-6**
- **GABELE M ET AL: "Fore and Aft Channel Reconstruction in the TerraSAR-X Dual Receive Antenna Mode", IEEE TRANSACTIONS ON GEOSCIENCE AND REMOTE SENSING, IEEE SERVICE CENTER, PISCATAWAY, NJ, US, vol. 48, no. 2, 1 février 2010 (2010-02-01), pages 795-806, XP011284728, ISSN: 0196-2892, DOI: 10.1109/TGRS.2009.2032920**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

La présente invention concerne un procédé de positionnement d'une cible mobile sur une image radar représentant les niveaux de réflectivité des différents contributeurs (réflecteurs) appartenant à une zone du sol éclairée par un faisceau radar. L'invention s'applique notamment à la production d'images SAR-GMTI simultané de haute résolution à partir d'un aéronef équipé d'une antenne radar.

Dans cette représentation SAR-GMTI le « fond d'image » composé des réflecteurs fixes est fourni par une image SAR (Synthetic Aperture Radar) et sur ce fond d'image, la position de chacun des réflecteurs mobiles présents qu'on recherche à détecter (que nous appellerons cible dans la suite de la description par convenance) sur la zone d'intérêt est signalé par un plot, affecté d'un vecteur vitesse correspondant au vecteur vitesse de la cible mobile à l'instant de référence choisi (généralement l'instant central de l'éclairement). Le positionnement de chaque cible mobile est rendu possible par le mode mode GMTI (« Ground Moving Target Indicator » en anglais).

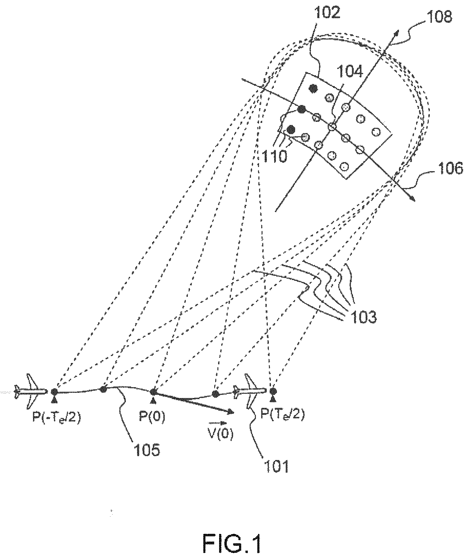

Pour rappel, la figure 1 illustre une phase d'acquisition de données par un porteur mobile en mode SAR « Spot », c'est à dire un mode dans lequel le faisceau antennaire est asservi en permanence sur la zone à imager. Un radar fixé sur un aéronef 101 illumine une zone imagée 102 durant une durée d'éclairement Te en asservissant le faisceau antennaire 103 sur le centre 104 de ladite zone 102 tout au long de la trajectoire 105 de l'aéronef 101. Cette durée Te est inversement proportionnelle à la résolution visée suivant l'axe transverse 106, la résolution suivant l'axe radial 108 étant quant à elle, inversement proportionnelle à la bande émise par l'antenne radar. La zone imagée 102 est maillée par un quadrillage 110 de cellules pour chacune desquelles on cherche à associer au moins un niveau de réflectivité.

Les détections du radar permettent de créer une image suivant l'axe radial 108 et l'axe transverse 106, respectivement désignés par la suite par les termes d'axe « Distance » 108 et d'axe « Doppler » 106. Cette image, qualifiée par la suite d'image « Distance-Doppler », délivre pour chaque cellule M située à l'intérieur de la zone imagée 102, une valeur de distance $D_M$ et une valeur de fréquence Doppler $f_M$, ces deux valeurs $D_M$ et $f_M$ étant référencées par rapport à un instant donné $t_{ref}$ correspondant, par exemple, à l'écoulement de la moitié de la durée totale de l'éclairement.

En décrivant un secteur angulaire donné autour de la zone imagée 102, le radar collecte périodiquement une série de N profils en distance avec une fréquence de récurrence $f_r$ égale à N/Te. Chacun des N profils en distance offre une représentation mono dimensionnelle de la zone imagée 102 suivant l'axe distance 108. En outre, l'axe distance 108 est divisé en plusieurs cases, chacune desdites cases ayant de préférence une taille légèrement inférieure à la résolution en distance. Pour une case distance donnée, une analyse spectrale suivant l'axe transverse 106 effectuée sur le signal collecté permet de discriminer en Doppler les différents échos contenus à l'intérieur de cette case. Cette analyse spectrale permet de discriminer les échos avec la résolution souhaitée si certaines conditions sont respectées.

La difficulté de la génération d'image SAR-GMTI tient au fait que :

- Dans un mode SAR classique (où les réflecteurs fixes sont positionnés en azimut d'après une mesure de leur fréquence Doppler à un instant de référence), les échos mobiles apparaissent à une position différente de leur position réelle dans la scène imagée : pour ces échos, la mesure de la fréquence Doppler ne peut plus être directement reliée à une position en azimut. En effet, l'expression de la fréquence Doppler de la cible fait non seulement intervenir son azimut (ou plus exactement son angle par rapport au vecteur vitesse du porteur) mais également la vitesse radiale de la cible, information inconnue a priori. En outre, la cible mobile est significativement « défocalisée » : son énergie se dilue sur un nombre important de cases Doppler, voire de cases Distance si la cible est ambiguë en Doppler. Par conséquent, une cible mobile ne bénéficie pas du gain de compression important du traitement SAR (large bande émise et durée d'intégration longue), ce qui rend sa détection délicate, a fortiori si le Doppler (ambigu) de la cible appartient à la plage Doppler (ambiguë) couverte par l'ensemble des réflecteurs fixes éclairés par le faisceau. On parle dans ce cas de cibles « endo clutter ». Ces cibles correspondent aux cibles lentes ou aux cibles rapides dont la vitesse radiale induit un décalage fréquentiel en Doppler correspondant à la fréquence de récurrence du mode SAR (dont la valeur définit l'ambiguïté Doppler).

- Un mode GMTI (Ground Moving Target Indicator) classique permet de détecter et de localiser les cibles mobiles mais ne fournit pas de représentation « résolue en azimut » de la zone de terrain éclairée par le faisceau radar. En effet, les temps d'intégration sont généralement trop courts pour discriminer en azimut les réflecteurs fixes du sol avec une résolution satisfaisante.

Afin de réduire au maximum l'étalement spectral du « clutter de sol » (signaux rétro-diffusés par l'ensemble des réflecteurs fixes du sol éclairés par le faisceau radar) et donc de réduire le nombre de cibles endo-clutter (dont la détection s'avère problématique), les acquisitions GMTI privilégient les géométries d'acquisition dites « dans l'axe » : le vecteur vitesse du porteur et le vecteur de visée dirigeant le faisceau radar sont colinéaires. Or ces configurations sont justement des configurations prohibées pour le SAR, puisqu'elles interdisent toute discrimination en azimut des réflecteurs fixes éclairés par le faisceau. Dès lors, la solution classique consistant à imager la zone d'intérêt avec un mode SAR (dépointé) pour ensuite y superposer les détections issues d'un mode GMTI pointant dans l'axe possède un inconvénient majeur : elle oblige le porteur à effectuer un virage entre l'acquisition SAR et l'acquisition GMTI.

Par ailleurs, la localisation en azimut des cibles mobiles (effectuée par écartométrie angulaire) et la localisation azimutale des réflecteurs fixes (déduite d'une mesure de fréquence Doppler convertie en angle par rapport au vecteur vitesse du porteur) sont entachées de deux biais d'origines différentes :

Pour les réflecteurs fixes, la précision de localisation est principalement liée à la précision de mesure sur la direction du vecteur vitesse du porteur (puisque la localisation angulaire de chaque réflecteur fixe est au final référencée par rapport à cette direction).

Pour les cibles mobiles, le biais sur le positionnement en azimut cumule principalement, d'une part un biais sur la mesure d'écartométrie angulaire, et d'autre part l'erreur sur la mesure de la position spatiale de l'antenne (la mesure écartométrique fournit un angle dans un repère lié à l'antenne. Il est ensuite nécessaire de connaître les coordonnées de ce repère « antenne » dans l'espace pour estimer finalement un azimut).

Par conséquent, le positionnement final des cibles mobiles sur l'image SAR additionne ces différents biais de mesure.

Il est connu de l'art antérieur, notamment par la publication de E. YADIN « Evaluation of noise and clutter induced relocation errors in SAR/MTI », une méthode pour évaluer les erreurs de localisation dans un système de détection SAR/MTI utilisant un interféromètre à deux voies

Il est également connu par la demande de brevet européenne EP 0 031 443 un dispositif et un procédé de détection d'une cible mobile.

La publication de BUDILLON A et ail, « moving target detection in along track SAR interferometry from in-phase and quadrature components data » enseigne une méthode de détection de cibles mobiles utilisant la partie réelle et la partie imaginaire de deux images SAR.

L'objectif de l'invention est de résoudre les problèmes précités.

Plus précisément, l'invention concerne un procédé de positionnement d'une cible mobile sur une image radar représentant les échos de réflectivité d'une zone éclairée par un faisceau radar. Avantageusement il comporte au moins les étapes suivantes :

- une première étape d'acquisition de deux images radar simultanément, une image radar représentant le niveau de réflectivité des réflecteurs positionnés dans la zone éclairée en fonction de leur distance par rapport aux voies de réception et de leur fréquence Doppler, la première et la seconde image radar étant acquises respectivement sur une première et une seconde voie de réception en azimut du radar. Outre l'information de réflectivité associée à chacun des réflecteurs présents sur la zone imagée, ces deux images radars fournissent également une information de phase. Pour un réflecteur donné et pour une voie de réception donnée, cette phase s'écrit $2\pi/\lambda \times D_{A/R}$ (modulo $2\pi$), où $D_{A/R}$ désigne la distance aller/retour parcourue par l'onde électromagnétique émise-réfléchie- reçue au niveau du centre de phase de la voie de réception considérée ($\lambda$ désigne la longueur d'onde de l'onde électromagnétique).
- une seconde étape de calcul, exécutée sur la base de la première et de la deuxième image radar, d'une table de correspondance mettant en relation pour une distance donnée une mesure d'une différence de phase entre les deux voies de réception avec une position sur lesdites images radar,
- une troisième étape de fourniture d'une cible mobile présente dans la première et seconde image radar et définie au moins par sa distance par rapport aux voies de réception et sa fréquence Doppler.
- une quatrième étape de calcul, exécutée sur la base de la première et de la deuxième image radar, pour la cible mobile, de la différence de phase entre la première et la deuxième image radar et de la distance par rapport aux voies de réception,
- une cinquième étape de positionnement de la cible mobile sur l'image radar sur la position du pixel défini, dans la table de correspondance, par la même différence de phase et la même distance réflecteur que ladite cible mobile.

Avantageusement, la seconde étape de calcul comporte les sous-étapes suivantes :

- Calcul d'une première image représentant une différence de phase mesurée entre la première et seconde voie de réception en fonction des données de distance et Doppler des réflecteurs,
- Calcul d'une seconde image représentant une différence de phase théorique à partir de la géométrie d'acquisition et des caractéristiques des voies de réception,
- Calcul d'une troisième image représentant l'erreur résiduelle de différence de phase entre la dite première image et la dite seconde image,
- Estimation paramétrique de l'erreur résiduelle de différence de phase, par remise en phase des échos des réflecteurs sur cette troisième image.

Avantageusement, la quatrième étape de calcul comporte les sous-étapes suivantes :

- Focalisation de la cible mobile sur la première et la seconde image radar,
- Extraction d'une fenêtre réduite dans la première et la seconde image radar centrée sur la cible mobile focalisée,
- Mesure de la différence de phase pour la cible mobile sur la base des fenêtres réduites issues de la première et de la seconde image radar.

Avantageusement, à la troisième étape, la cible mobile fait partie d'une liste de cibles mobiles.

Le procédé de positionnement de réflecteurs mobiles selon l'invention permet d'obtenir une image radar de type SAR-GMTI par une acquisition unique. En effet, il n'est plus nécessaire que la plate-forme mobile exécute un changement de trajectoire pour réaliser une première acquisition en dépointée puis une seconde acquisition dans l'axe de déplacement de la plate-forme.

De plus, ce procédé n'est pas affecté par le biais des mesures que l'on retrouve classiquement dans les solutions de l'état de la technique. Cette méthode permet d'annuler le biais sur le positionnement relatif des réflecteurs mobiles et des réflecteurs fixes. En d'autres termes, l'erreur de positionnement relatif des cibles mobiles et des réflecteurs fixes de la zone imagée est caractérisée par une moyenne nulle.

L'invention sera mieux comprise et d'autres avantages apparaîtront à la lecture de la description qui va suivre donnée à titre non limitatif et grâce aux figures suivantes :

La figure 1 représente une illustration d'une phase d'acquisition de données par un porteur mobile (art antérieur) ;

La figure 2 est un schéma représentant des moyens d'acquisition des images radar pour la mise en oeuvre du procédé selon l'invention. En particulier, on illustre ici les deux voies de réception en azimut (voies A et B) ainsi que la différence de trajet $\Delta R$ existant entre ces deux voies si l'on considère le signal rétro-diffusé par un réflecteur dont la direction est caractérisée par un angle $\theta$.

La figure 3 est un schéma représentant les étapes du procédé de positionnement d'une cible selon l'invention.

L'invention s'applique aux porteurs mobiles de type aéronefs ou satellite embarquant un dispositif de type radar pour la surveillance d'une zone d'intérêt.

L'invention permet d'obtenir une image synthétique sur laquelle apparaissent les mobiles avec leur direction de déplacement. Une telle image est obtenue à partir du procédé selon l'invention. Sur une image radar résultant du procédé selon l'invention, les cibles mobiles ont été préalablement détectées et caractérisées en fonction de leur distance par rapport à l'aéronef et de leur fréquence Doppler. Sur cette image Distance-Doppler de la zone d'intérêt, la position de chacune des cibles mobiles détectées est représentée par un plot d'une couleur. La couleur du plot fournit une indication sur le signe de la composante radiale du vecteur vitesse de la cible (éloignement ou rapprochement). Une telle information se déduit directement de la fréquence Doppler et de la position de la cible. Typiquement, ce type d'information peut aider à déterminer sur quelle voie de circulation se trouve la cible détectée,.

Au final, un tel mode fournit une image SAR de la zone d'intérêt, sur laquelle viennent se superposer des plots associés au cibles mobiles. Ces plots fournissent les positions des cibles mobiles présentes sur la zone imagée, à un instant de référence correspondant (généralement) à l'instant central de l'acquisition.

Typiquement, la forme d'onde utilisée est celle d'un mode SAR de résolution métrique utilisant une fréquence de récurrence la plus haute possible, afin d'élargir au maximum la zone claire en Doppler et d'augmenter la largeur de l'ambiguïté Doppler.

Le procédé selon l'invention est mis en oeuvre au moyen d'un dispositif radar couplé à des capacités électroniques et de traitement informatique pour une application d'imagerie SAR (idéalement de résolution de classe métrique) et comportant au minimum deux voies de réception en azimut.

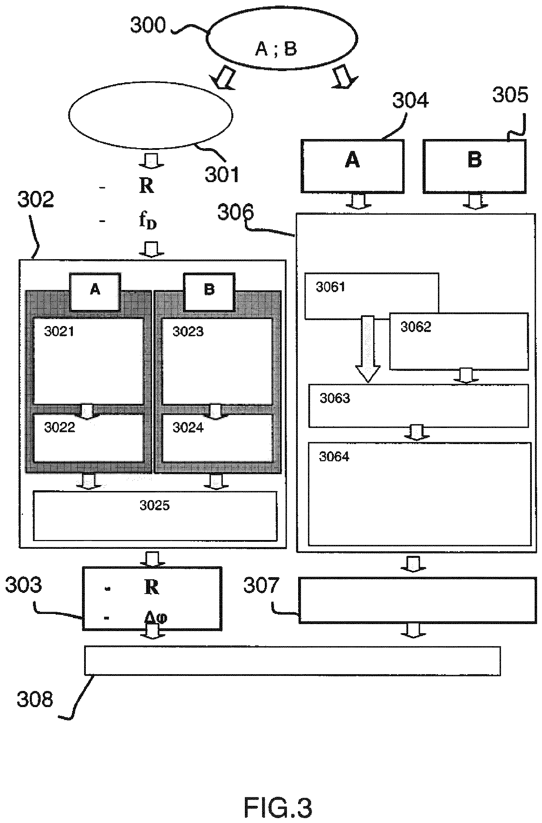

Ces capacités électroniques et de traitement informatique pour une application d'imagerie SAR peuvent être embarqué sur le porteur ou localisé sur une station éloignée. Dans ce dernier cas, le porteur possède également des moyens de transmissions des données mesurées vers la station éloignées. Dans le cas d'une application pour un aéronef comme illustrée par la figure 1, les deux voies de réception peuvent être par exemple deux panneaux antennaires positionnés sur une surface du porteur faisant face à une direction non colinéaire à la trajectoire du porteur. Ceci afin de pouvoir discriminer en Doppler (et donc en azimut) les échos fixes du sol éclairés par le faisceau radar et d'être ainsi en mesure de constituer une image SAR. Le principe de l'invention repose sur le fait que si deux réflecteurs focalisés sont situés à la même distance R des voies de réception (à l'instant central de l'éclairement) et présentent la même différence de phase $\Delta\varphi$, leur position est identique à l'instant central de l'éclairement, et ce quelle que soit leur nature (fixe ou mobile). La différence de phase de réflecteurs de la zone d'intérêt peut être calculée par la mesure d'images SAR sur deux voies de réception. A partir de l'acquisition de deux images SAR mesurées simultanément sur deux voies de réception A et B du radar à une première étape, le procédé tel que représenté par la figure 3, a pour objectif de calculer, à une étape suivante 306, une table de correspondance mettant en relation une distance donnée D avec une mesure d'une différence de phase Δφ, à une autre étape 302 exécutée en parallèle ou la suite de l'étape 306, de calculer, pour une cible, sa différence de phase Δφ, mesurée entre les deux voies de réception A et B, et la distance D par rapport aux voies de réception A et B et, à une étape finale 308, de positionner la cible sur l'image radar sur la position du pixel défini, dans la table de correspondance, par la même différence de phase et la même distance réflecteur que la cible.

Plus précisément, le procédé comporte une première étape 300 d'acquisition de deux images radar simultanément, la première et la seconde image radar étant acquises respectivement sur une première et une seconde voie de réception A et B en azimut du radar. Le procédé peut comporter une répétition d'acquisitions d'images prises à des positions différentes de la trajectoire du porteur. A partir de l'acquisition d'au moins un couple d'images d'une zone d'intérêt, le procédé comporte plusieurs étapes de traitement d'images dans le but d'obtenir des informations relatives aux réflecteurs de des images.

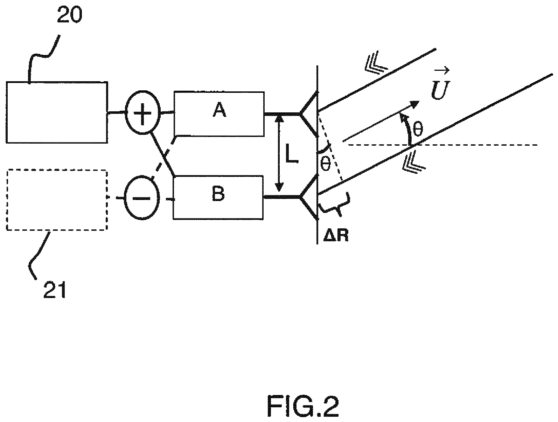

La figure 2 représente schématiquement les voies de réception A et B du dispositif radar et les deux droites reliant un réflecteur M (placé à une distance très grande par rapport à l'espacement séparant les deux centres de phases des deux voies de réception) aux deux centres de phase des deux voies de réception. Si l'on considère le signal rétro-diffusé par ce réflecteur M, signal dont la direction d'arrivée est caractérisée par un angle θ, la différence de phase Δφ entre les deux voies se déduit directement de la différence de trajet $\Delta R$ : $\Delta\varphi = 2\pi/\lambda \times \Delta R$.. Chaque image fournit une représentation Distance-Doppler de la zone d'intérêt, sur laquelle on peut lire les informations suivantes pour chacun des réflecteurs ponctuels fixes imagés. Toutes ces grandeurs sont référencées temporellement par rapport à l'instant central de l'éclairement :

- Distance Aller-Retour correspondant à la distance du centre de phase de l'antenne complète (voie Somme) au réflecteur le réflecteur sommée avec la distance du réflecteur au centre de phase de la voie de réception considérée (voie A ou voie B). On note respectivement $R_A$ et $R_B$ les distances entre le réflecteur et les deux centres de phase des deux voies de réceptions A et B. R désigne la distance séparant ce même réflecteur du centre de phase associé à la voie Somme (émission sur l'antenne complète). Pour les résolutions radiales utilisées, l'écart entre $R_A$ et $R_B$ est négligeable par rapport à la résolution radiale du mode SAR. Par conséquent, le même réflecteur apparaît à la même distance sur les deux images.

- Fréquence Doppler du réflecteur (identique sur les deux images). Dans le cas d'un réflecteur fixe, cette fréquence Doppler s'écrit $\dfrac{2}{\lambda}\vec{V}.\vec{U}$. Dans cette expression, $\vec{V}$ désigne le vecteur vitesse du centre de phase de l'antenne et $\vec{U}$ le vecteur unitaire pointant vers le réflecteur considéré ($\lambda$ représente la longueur d'onde du mode SAR). Dans le cas d'un réflecteur fixe, les mesures de la fréquence Doppler, de la distance R, du vecteur $\vec{V}$ et de l'altitude relative porteur-réflecteur permet d'estimer le vecteur $\vec{U}$.

- Amplitude du réflecteur (identique sur les deux images).

- Phase associée au réflecteur. Suivant la voie de réception considérée, cette phase s'écrit $\dfrac{2\pi}{\lambda}\left(R + R_A\right)$ ou $\dfrac{2\pi}{\lambda}\left(R + R_B\right)$. Cette différence de phase entre les deux voies de réception est un des éléments essentiels exploité par le procédé de l'invention. En effet, une mesure de différence de phase Δφ entre les deux voies permet elle aussi d'estimer le vecteur $\vec{U}$ pointant vers le réflecteur considéré (détermination de l'azimut), comme l'illustre la figure 2: Pour les calculs, on considère que L, la longueur représentant l'espacement entre les deux centres de phase associés aux deux voies de réception, est très inférieure à la distance R. Selon la géométrie du dispositif radar de la figure 3, on a $\Delta R = R_B - R_A = L\sin\theta$ et $\Delta\varphi = 2\pi/\lambda\ \Delta R = 2\pi\ L/\lambda\ \sin\theta$.

A partir des images radar obtenues à la première étape 300, le procédé comporte une étape 301 de détection d'une cible mobile ou d'une liste de cibles mobiles. Dans cette liste, chacune des cibles mobiles est définie par :

- Sa distance R avec le centre de phase de l'antenne à l'instant central de l'éclairement.
- Sa fréquence Doppler non ambiguë à l'instant central de l'éclairement. Dans le cas d'une cible mobile, cette fréquence Doppler s'écrit $\dfrac{2}{\lambda}\left(\vec{V} - \vec{V_c}\right).\vec{U}$, où $\vec{V_c}$ désigne le vecteur vitesse de la cible à l'instant central de l'éclairement. Contrairement au cas du réflecteur fixe, la connaissance de la fréquence Doppler, de la distance R, du vecteur vitesse $\vec{V}$ et de l'altitude relative porteur-réflecteur ne suffisent plus à caractériser de manière précise le vecteur unitaire $\vec{U}$ pointant vers la cible : on ne dispose en effet d'aucune information sur le vecteur vitesse $\vec{V_c}$ de la cible.

En d'autres termes, il devient désormais impossible de relier de manière fiable une mesure de fréquence Doppler avec une position en azimut.

- Une loi de focalisation. Cette loi caractérise la migration (en Distance et en Doppler) de la cible au cours de l'éclairement, ou au moins au cours d'une partie de l'éclairement centrée sur l'instant de référence (centre de l'éclairement). Plus généralement, on dispose des informations nécessaires pour pouvoir obtenir une représentation « focalisée » de la cible dans le domaine Distance-Doppler (représentation débarrassée de toute migration résiduelle en Distance ou en Doppler), sur une durée d'intégration suffisante pour garantir un gain de compression significatif : après correction des migrations Distance et Doppler, l'énergie de la cible peut ainsi être concentrée sur un nombre limité de pixels dans le domaine Distance-Doppler.

Plus précisément, l'étape 301 du procédé de détection et de caractérisation d'une cible mobile sur une image radar comprend les sous-étapes suivantes :

une première sous-étape d'élimination des échos fixes stationnaires de forte réflectivité mesurés sur l'image radar, dans le cas où l'on s'intéresse aux cibles mobiles dites « endo-clutter », c'est à dire les cibles mobiles dont la fréquence Doppler (ambiguë) appartient à la plage Doppler (ambiguë) couverte par les échos fixes éclairés par le faisceau radar.
une seconde sous-étape de réduction de la durée d'intégration par extraction de la portion d'éclairement temporelle centrale sur l'image radar,
une troisième sous-étape de focalisation de l'écho de la cible mobile par application d'une correction de la migration de distance et de la migration de Doppler de la cible mobile sur l'image radar,
une quatrième sous-étape d'extraction de la cible mobile de l'image radar,

Plus précisément, la première sous-étape d'élimination des échos fixes stationnaires comprend un abaissement de la réflectivité des échos mobiles consistant à conserver, pour chacun des pixels de l'image radar, la réflectivité minimale sur l'ensemble de la répétition d'acquisitions radar et une détection des échos fixes par une opération de seuillage.

Plus précisément, à la troisième sous-étape, la correction de la migration distance d'une cible est exécutée en testant plusieurs rangs d'ambiguïté doppler possibles pour la cible.

Plus précisément, à la troisième sous-étape la correction de la migration Doppler d'une cible est effectuée en testant plusieurs hypothèses de loi de phase quadratique pour compenser la phase résiduelle caractérisant la migration résiduelle en Doppler de la cible mobile, le terme quadratique de cette phase résiduelle étant défini par la formule suivante:

$$\phi_{2,C}(t) = \frac{4\pi}{\lambda} \times \frac{\left(\vec{V}-\vec{V_c}\right)^2 - \left(\frac{\lambda \times f_d C}{2}\right)^2}{2R_c} \times t^2 \ ,$$

Où :

- $\vec{V}$ : vecteur vitesse du porteur
- $C$ : position de la cible
- $\vec{V_c}$ : vecteur vitesse de la cible
- $R_c$ : distance Porteur-Cible :
- $f_d C$ : fréquence Doppler de la cible

Plus précisément, la troisième sous-étape comprend un filtrage des points défocalisés.

Plus précisément, la quatrième sous-étape comprend une opération de seuillage des pixels de l'image radar.

A la suite de l'étape 301, le procédé comporte une étape principale 302 de calcul, pour la cible caractérisée ou chaque cible caractérisée de la liste de cibles mobiles, d'une part de la différence de phase mesurée entre la première et la deuxième image radar A et B et d'autre part de la distance R de la ou les cibles par rapport aux voies de réception.

L'étape 301 a fourni une liste de cibles détectées, où chacune des cibles est caractérisée par sa distance R et sa fréquence Doppler f à l'instant central de l'éclairement, et une loi de focalisation sur une durée d'intégration T donnée, durée centrée sur l'instant central de l'éclairement complet.

Pour une cible donnée, la mesure de différence de phase $\Delta\varphi$ entre les deux voies de réception A et B s'effectue à partir des deux représentations Distance-Doppler focalisées de la cible, obtenues sur les deux voies de réception A et B.

Pour chacune des cibles, à une sous-étape 3021 et 3023 de l'étape 302, ces informations permettent d'obtenir une représentation Distance-Doppler focalisée, c'est à dire une représentation où l'énergie de la cible se concentre sur un nombre restreint de pixels centrés autour de la position (R,f) dans le plan Distance-Doppler maillé avec une résolution $\delta R$ en distance (résolution radiale de la forme d'onde) et une résolution égale à $1/T$ en Doppler.

Cette focalisation sur un nombre limité de pixels dans le domaine Distance-Doppler permet d'isoler le signal associé à la cible des signaux issus des autres réflecteurs et de bénéficier d'un gain de compression important (inversement proportionnel à la résolution radiale et proportionnel à la durée d'intégration T pour une cible ponctuelle), autrement dit d'un rapport Signal à Bruit avantageux.

Sur ces deux représentations, deux fenêtres d'analyse de taille réduite sont extraites, pour les images provenant des images A et B respectivement à une sous-étape 3022 et une sous-étape 3024, autour de la position (R,f), afin d'isoler les pixels sur lesquels se concentre l'énergie de la cible focalisée. Typiquement, la fenêtre d'analyse contient $3 \times 3$ ou $5 \times 5$ pixels.

On note ces fenêtres d'analyse FenêtrevoieA(m,n) et FenêtrevoieB(m,n).

La différence de phase $\Delta\varphi$ est estimée, à une sous-étape 3025 de l'étape 302, en calculant la phase du nombre complexe suivant :

$$\sum_{m,n} \left( \text{FenêtrevoieA}^{(m,n)} \times \text{Conjugué[FenêtrevoieB}^{(m,n)}] \right).$$

On accorde ainsi un poids maximal aux pixels où se concentre l'énergie de la cible. La qualité de cette mesure de $\Delta\varphi$ est directement liée au rapport Signal sur Bruit dont bénéficie la cible focalisée.

A l'issue de cette opération, effectuée sur chacune des cibles détectées, à une étape 303, on fournit une liste de cibles mobiles où les différentes cibles sont désormais caractérisées par leur distance R et leur différence de phase $\Delta\varphi$.

Par ailleurs, à partir des images radar obtenues à la première étape 300 sur les deux voies de réception A et B, le procédé comporte une autre étape principale 306 comportant également plusieurs sous-étapes 3061, 3062, 3063, 3064. Cette étape 306 a pour fonction de calculer, à partir de la première et de la deuxième image radar fournies respectivement par une étape 304 et 305, une table de correspondance mettant en relation pour une distance donnée une mesure d'une différence de phase, calculée entre les images issues des deux voies de réception A et B, avec une position sur lesdites images radar, c'est-à-dire des coordonnées de pixels sur l'image radar.

Cette table se présente sous la forme d'un tableau Distance-Doppler nommé Tableau $\Delta\varphi$(m,n), où les indices m et n sont associés respectivement à l'axe Doppler et à l'axe Distance.

Plus précisément, elle se calcule de la manière suivante :

On note respectivement ImagevoieA(m,n) et ImagevoieB(m,n) les deux images SAR Distance-Doppler associées aux deux voies de réception en azimut A et B.

la première étape 3061 de l'élaboration de la table de mise en correspondance consiste à calculer l'image « Différence de phase mesurée ». Cette image a pour expression :

$$\text{Image } \Delta\varphi\text{mesuré(m,n)} = \text{ImagevoieA(m,n)} \times \text{conjugué[ImagevoieB(m,n)]}$$

Sur cette nouvelle image Distance-Doppler de la zone d'intérêt, la phase associée à un réflecteur focalisé positionné en (m,n) s'écrit désormais (au bruit près) : $\Delta\varphi$mesuré(m,n) $= 2\pi L/\lambda \times \sin(\theta)$.

$\theta$ désigne ici l'angle entre le plan perpendiculaire à la droite reliant les deux centres de phase des deux voies de réception et le vecteur $\vec{U}$ pointant vers le réflecteur considéré à l'instant central de l'éclairement.

En première approximation (en négligeant le site de prise de vue), cet angle $\theta$ peut être assimilé à l'azimut du point, à l'ajout d'une constante près.

Cette image Image $\Delta\varphi$mesuré(m,n) peut fournir de manière brute une première table de mise en correspondance non biaisée, avec les deux réserves majeures suivantes :

La mesure de différence de phase $\Delta\varphi$ mesuré n'a aucune signification sur les zones ne présentant aucune cohérence de phase entre les deux voies de réception. C'est typiquement le cas des zones peu réfléchissantes (eau, bitume...) ou des zones d'ombre sur l'image SAR.

Cette mesure est entachée d'un bruit et ne permet une mise en correspondance fiable que pour les réflecteurs fixes de forte réflectivité.

C'est pourquoi une seconde table 3062 de mise en correspondance est calculée de manière théorique, d'après la géométrie d'acquisition SAR et la connaissance des coordonnées du vecteur $\overrightarrow{AB}$ reliant les deux centres de phases des deux voies de réception A et B à l'instant central de l'éclairement. Pour un réflecteur positionné en (m,n) correspondant à un couple Doppler-Distance donné, on estime dans un premier temps le vecteur $\vec{U}$ comme dans une opération de mise en conformité classique.

La valeur Δφthéorique(m,n) s'écrit ensuite : $2\pi\dfrac{\overline{AB}}{L}.\vec{U}$

Cette deuxième table de mise en correspondance calculée à l'étape 3062 fournit une valeur Δφthéorique(m,n) non bruitée et avec un degré de fiabilité identique sur l'intégralité de la zone imagée. Malheureusement, elle conduit à une mise en correspondance biaisée (à cause entre autre des erreurs commises pour caractériser le vecteur $\overrightarrow{AB}$).

Par conséquent, l'étape finale 3064 de l'étape 306 consiste à utiliser ces deux premières tables pour construire une nouvelle table fournissant une différence de phase Δφ(m,n) non bruitée, fiable sur l'ensemble de la zone imagée et approximant au mieux sur les zones fortement réflectives les valeurs fournies par l'image Image Δφmesuré(m,n), afin de délivrer une estimation finale non biaisée.

Pour ce faire, on calcule à une étape intermédiaire 3063 l'image « Erreur résiduelle de Δφ », image qui caractérise les écarts résiduels de phase entre les valeurs fournies par les deux tables.

Cette image s'écrit :

$$\text{Image}\,\Delta\varphi_\varepsilon(m,n)=$$

$$\text{Image}\Delta\varphi\ \text{mesuré(m,n)} \times \text{Conjugué[Image}\Delta\varphi\text{théorique(m,n)]},$$

avec ImageΔφthéorique(m,n) = exp[jΔφthéorique(m,n)].
« exp » désigne ici la fonction exponentielle complexe.

Une telle image Distance - Doppler présente l'avantage suivant :

Sur les zones de l'image présentant une forte cohérence de phase entre les deux voies de réception, l'écart de phase résiduel peut être caractérisé par un nombre très restreint de paramètres : classiquement, cet écart de phase peut être efficacement modélisé par une fonction affine en Doppler et affine en Distance. Toutefois, rien n'interdit de modéliser cet écart résiduel de phase avec un nombre plus important de paramètres.

Cette réduction du nombre de paramètres à estimer est rendue possible grâce à l'utilisation de la table de mise en correspondance « théorique » (Δφthéorique(m,n)), qui permet d'estimer d'emblée de manière pertinente les termes d'ordres supérieurs ou égaux à deux dans l'expression de la différence de phase Δφ(m,n) en fonction du Doppler et de la Distance.

Si l'on modélise l'écart résiduel de phase $\Delta\varphi_\varepsilon(m,n)$ par une fonction affine en Doppler et affine en Distance, les paramètres manquant peuvent par exemple être estimés en cherchant le couple $\left(\widehat{pente}_f, \widehat{pente}_D\right)$ qui maximise la norme du nombre complexe suivant:

$$Z\left(pente_f, pente_D\right) = \sum_{m,n}\Big[\,\text{Image}^{\Delta\varphi_\varepsilon(m,n)} \times$$
$$\exp\big(j\big(pente_f \times m + pente_D \times n\big)\big)\,\Big]$$

En d'autres termes, on cherche ici à remettre en phase l'ensemble des échos de l'image Image $\Delta\varphi_\varepsilon(m,n)$ en accordant un poids maximal aux échos fortement réfléchissant.

Dès lors, l'image suivante, notée Image $\Delta\widehat{\varphi}_\varepsilon(m,n)$, présente une cohérence de phase maximale avec l'image

Image $\Delta\varphi_{\varepsilon}(m,n)$ sur les zones de l'image SAR composées de réflecteurs fixes fortement réflectifs :

$$\text{Image}^{\Delta\hat{\varphi}_{\varepsilon}(m,n)} = \frac{\hat{Z}}{\left\|\hat{Z}\right\|}\exp\left(-j\left(\hat{pente}_{f}\times m + \hat{pente}_{D}\times n\right)\right)$$

avec $\hat{Z} = Z\left(\hat{pente}_{f}, \hat{pente}_{D}\right)$

A l'issue de cette dernière étape 3064, la table de mise en correspondance recherchée Tableau$\Delta\varphi$(m,n) se déduit directement de l'image Distance-Doppler suivante :

$$\text{Image } \Delta\varphi(m,n) = \text{Image } \Delta\varphi\text{théorique}(m,n) \times \text{Image}^{\Delta\ddot{\varphi}_{\varepsilon}(m,n)}.$$

On dispose ainsi au final d'une Table de mise en correspondance ayant l'avantage d'être non biaisée, non bruitée et fiable sur l'ensemble de la zone imagée.

Finalement, le procédé selon l'invention comporte une troisième étape principale 308 de positionnement de la cible sur l'image radar sur la position du pixel défini, dans la table de correspondance, par la même différence de phase et la même distance réflecteur que la cible.

A ce stade, on dispose à une étape intermédiaire 303 d'une liste de cibles mobiles caractérisée chacune par un couple (Distance R, différence de phase $\Delta\varphi$) et à une autre étape intermédiaire 307 d'une table de mise en correspondance, qui met en relation un couple (Distance R, différence de phase $\Delta\varphi$) et une position sur l'image SAR Distance-Doppler de la zone imagée (indice de pixel (m,n)).

Le positionnement final d'une cible sur l'image SAR se fait donc simplement en cherchant sur la Table de mise en correspondance la position du pixel associée au couple (Distance R, différence de phase $\Delta\varphi$) caractérisant la cible.

## Revendications

1. Procédé de positionnement d'une cible mobile sur une image radar représentant les échos de réflectivité d'une zone éclairée par un faisceau radar, ledit radar étant installé sur un porteur mobile, ledit procédé comportant au moins les étapes suivantes :

   - une première étape (300) d'acquisition de deux images radar simultanément, une image radar représentant le niveau de réflectivité et la phase des réflecteurs positionnés dans la zone éclairée en fonction de leur distance par rapport aux voies de réception et de leur fréquence Doppler, la première et la seconde image radar étant acquises respectivement sur une première (A) et une seconde voie (B) de réception en azimut du radar,
   - une seconde étape (306) de calcul, exécutée sur la base de la première et de la deuxième image radar, d'une table de correspondance mettant en relation pour une distance donnée une mesure d'une différence de phase entre les deux voies de réception avec une position sur lesdites images radar,
   - une troisième étape (301) de fourniture d'une cible mobile présente dans la première et seconde image radar et définie au moins par sa distance par rapport aux voies de réception et sa fréquence Doppler.
   - une quatrième étape (302) de calcul, exécutée sur la base de la première et de la deuxième image radar, pour la cible mobile, de la différence de phase entre la première et la deuxième image radar et de la distance par rapport aux voies de réception,
   - une cinquième étape (308) de positionnement de la cible mobile sur l'image radar sur la position du pixel défini, dans la table de correspondance, par la même différence de phase et la même distance réflecteur que ladite cible mobile,

   **caractérisé en ce que** ladite seconde étape (306) de calcul comporte les sous-étapes suivantes :

   - Calcul (3061) d'une première image représentant une différence de phase mesurée entre la première et seconde voie de réception en fonction des données de distance et Doppler des réflecteurs,

- Calcul (3062) d'une seconde image représentant une différence de phase théorique à partir de la géométrie d'acquisition et des caractéristiques des voies de réception,
- Calcul (3063) d'une troisième image représentant l'erreur résiduelle de différence de phase entre la dite première image et la dite seconde image,
- Estimation paramétrique de l'erreur résiduelle de différence de phase, par remise (3064) en phase des échos des réflecteurs sur cette troisième image.

2. Procédé selon la revendication 1, **caractérisé en ce que** la quatrième étape (302) de calcul comporte les sous-étapes suivantes :

- Focalisation (3021 ; 3023) de la cible mobile sur la première et la seconde image radar,
- Extraction (3022 ; 3024) d'une fenêtre réduite dans la première et la seconde image radar centrée sur la cible mobile focalisée,
- Mesure (3025) de la différence de phase pour la cible mobile sur la base des fenêtres réduites issues de la première et de la seconde image radar.

3. Procédé selon la revendication 1, **caractérisé en ce qu'**à la troisième (301) étape, la cible mobile fait partie d'une liste de cibles mobiles.

**Patentansprüche**

1. Verfahren zum Positionieren eines beweglichen Ziels auf einem Radarbild, das Rückstrahlechos einer durch einen Radarstrahl beleuchteten Zone repräsentiert, wobei das Radar auf einem beweglichen Träger installiert ist, wobei das Verfahren wenigstens die folgenden Schritte beinhaltet:

- einen ersten Schritt (300) des gleichzeitigen Erfassens von zwei Radarbildern, wobei ein Radarbild das Rückstrahlniveau und die Phase der in der beleuchteten Zone positionierten Reflektoren in Abhängigkeit von ihrem Abstand mit Bezug auf die Empfangskanäle und ihrer Doppler-Frequenz repräsentiert, wobei das erste und das zweite Radarbild jeweils auf einem ersten (A) und einem zweiten (B) Empfangskanal im Azimut des Radars erfasst werden,
- einen zweiten Schritt (306) des Berechnens, ausgeführt auf der Basis des ersten und zweiten Radarbildes, einer Korrespondenztabelle, die für einen gegebenen Abstand ein Maß einer Phasendifferenz zwischen den beiden Empfangskanälen mit einer Position auf den Radarbildern verknüpft,
- einen dritten Schritt (301) des Lieferns eines im ersten und zweiten Radarbild vorhandenen beweglichen Ziels, definiert wenigstens anhand seines Abstands mit Bezug auf die Empfangskanäle und seiner Doppler-Frequenz,
- einen vierten Schritt (302) des Berechnens, ausgeführt auf der Basis des ersten und des zweiten Radarbildes, für das bewegliche Ziel, der Phasendifferenz zwischen dem ersten und dem zweiten Radarbild und dem Abstand mit Bezug auf die Empfangskanäle,
- einen fünften Schritt (308) des Positionierens des beweglichen Ziels auf dem Radarbild in der Position des definierten Pixels, in der Korrespondenztabelle, anhand derselben Phasendifferenz und desselben Reflektorabstands wie das bewegliche Ziel,

**dadurch gekennzeichnet, dass** der zweite Berechnungsschritt (306) die folgenden Unterschritte beinhaltet:

- Berechnen (3061) eines ersten Bildes, das eine zwischen dem ersten und dem zweiten Empfangskanal gemessene Phasendifferenz repräsentiert, in Abhängigkeit von Abstands- und Doppler-Daten der Reflektoren,
- Berechnen (3062) eines zweiten Bildes, das eine theoretische Phasendifferenz repräsentiert, anhand der Erfassungsgeometrie und der Charakteristiken der Empfangskanäle,
- Berechnen (3063) eines dritten Bildes, das den Restfehler der Phasendifferenz zwischen dem ersten Bild und dem zweiten Bild repräsentiert,
- parametrisches Schätzen des Restfehlers der Phasendifferenz durch Phasenrückführung (3064) der Echos der Reflektoren auf diesem dritten Bild.

2. Verfahren nach Anspruch 1, **dadurch gekennzeichnet, dass** der vierte Rechenschritt (302) die folgenden Unterschritte beinhaltet:

- Fokussieren (3021; 3023) des beweglichen Ziels auf dem ersten und dem zweiten Radarbild,

- Extrahieren (3022; 3024) eines reduzierten Fensters im ersten und im zweiten Radarbild, zentriert auf dem fokussierten beweglichen Ziel,
- Messen (3025) der Phasendifferenz für das bewegliche Ziel auf der Basis der reduzierten Fenster, die aus dem ersten und dem zweiten Radarbild stammen.

**3.** Verfahren nach Anspruch 1, **dadurch gekennzeichnet, dass** im dritten Schritt (301) das bewegliche Ziel Teil einer Liste von beweglichen Zielen ist.

**Claims**

**1.** A method for positioning a moving target on a radar image representing the reflectivity echoes of an area illuminated by a radar beam, said radar being installed on a moving carrier, said method comprising at least the following steps:

- a first step (300) of acquisition of two radar images simultaneously, one radar image representing the reflectivity level and the phase of the reflectors positioned in the illuminated area as a function of their distance relative to the reception paths and their Doppler frequency, the first and the second radar images being acquired respectively on a first (A) and a second (B) azimuth reception path of the radar,
- a second step (306) of calculation, executed on the basis of the first and the second radar images, of a mapping table correlating, for a given distance, a measurement of a phase difference between the two reception paths with a position on said radar images,
- a third step (301) of supplying a moving target present in the first and second radar images and defined at least by its distance relative to the reception paths and its Doppler frequency,
- a fourth step (302) of calculation, executed on the basis of the first and the second radar images, for the moving target, of the phase difference between the first and the second radar images and of the distance relative to the reception paths,
- a fifth step (308) of positioning the moving target on the radar image on the position of the pixel defined, in the mapping table, by the same phase difference and the same reflector distance as said moving target,

**characterized in that** the calculation second step (306) comprises the following substeps:

- calculation (3061) of a first image representing a phase difference measured between the first and second reception paths as a function of the distance and Doppler data of the reflectors,
- calculation (3062) of a second image representing a theoretical phase difference from the acquisition geometry and from the characteristics of the reception paths,
- calculation (3063) of a third image representing the residual phase difference error between said first image and said second image,
- parametric estimation of the residual phase difference error, by rephrasing (3064) of the echoes of the reflectors on this third image.

**2.** The method as claimed in claim 1, **characterized in that** the calculation fourth step (302) comprises the following substeps:

- focusing (3021; 3023) of the moving target on the first and the second radar images,
- extraction (3022; 3024) of a reduced window from the first and the second radar images centered on the focused moving target,
- measurement (3025) of the phase difference for the moving target on the basis of the reduced windows obtained from the first and the second radar images.

**3.** The method as claimed in claim 1, **characterized in that**, in the third step (301), the moving target is part of a list of moving targets

FIG.1

FIG.2

FIG.3

**EP 2 681 579 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0031443 A